# EUROPÄISCHE PATENTSCHRIFT

(11) **EP 2 236 333 B1**
(45) Veröffentlichungstag und Bekanntmachung des Hinweises auf die Patenterteilung: **15.05.2013**
(21) Anmeldenummer: 10002923.0
(22) Anmeldetag: 19.03.2010
(51) Int. Cl.: B60H 1/34, B60R 11/02, B60R 13/02, H04R 9/06, B29C 45/26, B29C 45/37

(54) **Abdeckung, insbesondere für ein Instrumententafelbauteil, sowie Spritzgusswerkzeug zu dessen Herstellung**
Covering, in particular for an instrument panel component and injection moulding tool for producing same
Recouvrement, notamment pour un composant de panneau d'instrument ainsi qu'outil de moulage par injection destiné à sa fabrication

(30) Priorität: 30.03.2009 DE 202009004224 U
(43) Veröffentlichungstag der Anmeldung: 06.10.2010
(73) Patentinhaber: REUM Kunststoff- und Metalltechnik GmbH, 74736 Hardheim (DE)
(72) Erfinder: Link, Manfred, 69427 Mudau (DE)
(74) Vertreter: Maser, Jochen

(56) Entgegenhaltungen:
- EP-A1- 0 766 102
- CN-Y- 201 354 035
- DE-A1-102004 049 271
- JP-A- 8 118 407
- US-A- 3 377 144
- US-A1- 2001 014 583

## Beschreibung

Die Erfindung betrifft eine Abdeckung, insbesondere für ein Instrumententafelbauteil, sowie ein Spritzgusswerkzeug zu dessen Herstellung.

Aus der DE 197 28 820 C1 ist beispielsweise eine Lautsprecherabdeckung aus einem Kunststoffmaterial bekannt, welche eine Gitterstruktur aufweist, die einen Streckmetall-Effekt umfasst. Die Gitterstruktur ist durch Rippen ausgebildet, welche insbesondere rautenförmige Perforationslöcher begrenzt. Solche Lautsprecherabdeckungen werden beispielsweise in Türseitenverkleidungen oder in Heckablageflächen als auch in Instrumententafelbauteilen integriert.

Document JP 8 118 407 A offenbart ein Spritzgießwerkzeug gemäß dem Oberbegriff des Anspruchs 1 und eine Abdeckung gemäß dem Oberbegriff des Anspruchs 4.

Zur erhöhten Anpassung an optische Anforderungen ist vorgesehen, dass solche Abdeckungen sich nicht nur auf die dahinter liegende Kontur des Lautsprechers erstrecken, sondern größere Flächenbereiche am Einbauort einnehmen, um optischen Anforderungen gerecht zu werden oder weitere Bereiche abzudecken. Damit eine einheitliche Optik bei solchen Abdeckungen vorliegt, werden diejenigen Bereiche, die außerhalb der Gitterstruktur liegen, durch sogenannte Blindlochstrukturen ausgebildet, das heißt, dass die Bereiche der Blindlochstruktur im Vergleich zur Gitterstruktur nicht schall- und/oder luftdurchlässig ausgebildet sind. Die Blindlochstrukturen umfassen Blindlöcher, welche aus einer Vertiefung mit einem Lochgrund bestehen. Solche Abdeckungen werden als Spritzgussteil hergestellt. Zur Ausgestaltung der Blindlochstrukturen sind Stempel vorgesehen, welche eine kegelstumpfförmige Kontur aufweisen. Eine in eine Kavität des Spritzgusswerkzeuges hineinragende Stirnseite des Stempels zur Herstellung einer Lochgrundfläche des Blindloches ist eben und parallel zur Oberfläche der Abdeckung ausgebildet. Diese Abdeckungen mit zumindest einem die Gitterstruktur aufweisenden Bereich und zumindest einem die Blindlochstruktur aufweisenden Bereich weisen den Nachteil auf, dass in das beziehungsweise die Blindlöcher einfallende Lichtstrahlen in dem Lochgrund der jeweiligen Vertiefung der Blindlochstruktur reflektiert werden, wodurch die gewünschte matte Anmutung solcher Abdeckungen nicht gegeben ist. Vielmehr erhalten Teilbereiche ein glänzendes Erscheinungsbild, das nicht gewünscht ist.

Der Erfindung liegt deshalb die Aufgabe zugrunde, ein Spritzgusswerkzeug sowie eine Abdeckung, vorzugsweise eine mit diesem Spritzgusswerkzeug hergestellte Abdeckung, vorzuschlagen, die in einfacher Weise eine Mattierung der Blindlochstruktur ermöglicht beziehungsweise die zumindest eine matt anmutende Blindlochstruktur aufweist.

Diese Aufgabe wird erfindungsgemäß durch ein Spritzgusswerkzeug gelöst, bei dem ein in die Kavität weisender Stirnbereich des jeweiligen Blindlochstempels eine Kontur und/oder Oberflächenstruktur aufweist, durch welche zumindest ein reflexionsbrechender Lochgrund des Blindlochs in der Abdeckung herstellbar ist. Durch die Änderungen der Kontur und/oder der Oberflächenstruktur abweichend von einer planen und parallelen Ausrichtung der Lochgrundfläche zur Oberfläche der Abdeckung wird ermöglicht, dass eine unmittelbare Reflektion der einfallenden Lichtstrahlen in den Lochgrund, insbesondere auf die Lochgrundfläche, nicht mehr aus der Vertiefung des Blindloches heraustritt, sondern innerhalb der Vertiefung des Blindloches die reflektierte Strahlung gebrochen wird oder dass eine Überlagerung der reflektierten Strahlung innerhalb des Blindloches erzielt wird, wodurch eine diffuse Lichtbrechung entsteht, durch welche die mattierte Anmutung der Abdeckung unabhängig des Betrachtungswinkels zur Abdeckung erhalten bleibt.

Nach einer bevorzugten Ausführungsform des Spritzgusswerkzeuges ist der Stirnbereich des Stempels, welcher zumindest das Stirnende und zumindest teilweise eine an das Stirnende angrenzende Umfangswand des Stempels umfasst, konvex ausgebildet. Durch diese Ausgestaltung wird eine konkave Kontur eines Lochgrundes in der Vertiefung der Blindlochstruktur erzielt, wodurch die vom Lochgrund des Blindloches reflektierten Lichtstrahlen sich kreuzen und brechen, so dass eine diffuse Lichtreflexion entsteht, die eine matte Anmutung bewirkt. Alternativ zur Ausgestaltung eines konkaven Stirnbereiches kann dieser auch eine elliptische oder parabelförmige Krümmung aufweisen. Ebenso kann eine irgendwie geartete gerundete oder eine halbkugelförmige Ausgestaltung des Stirnbereiches vorgesehen sein. Des Weiteren kann dieser Stirnbereich des Stempels im Querschnitt gesehen eine nadelspitzenförmige, eine V-förmige oder eine W-förmige Ausgestaltung umfassen. Durch all diese alternativen Ausführungsformen wird dieselbe Wirkung erzielt, welche vorstehend am Beispiel dem konvexen Stirnbereich des Stempels beschrieben ist.

Eine weitere bevorzugte Ausgestaltung der Erfindung sieht vor, dass der Stirnbereich des Stempels oberflächenbehandelt ist. Dadurch kann wiederum eine Lichtbrechung erzielt werden, indem durch den Stempel dessen Oberflächenstruktur durch die Oberflächenbehandlung auf den Lochgrund der Vertiefung des Blindloches übertragen wird. Bevorzugt ist dabei vorgesehen, dass zumindest der Stirnbereich des Stempels aufgeraut ist und beispielsweise eine Art sandgestrahlte Oberfläche, insbesondere mit einer groben Körnung, aufweist. Dadurch kann eine vielfältige Lichtbrechung erfolgen. Alternativ kann der Stirnbereich des Stempels eine Art Rändelung umfassen. Ebenso können weitere kleinflächige geprägte Konturen aufgebracht werden, die auf den Lochgrund der Vertiefung während der Herstellung der Blindlochvertiefung übertragbar sind und eine Lichtbrechung erzeugen.

Nach einer weiteren bevorzugten Ausgestaltung der Erfindung ist vorgesehen, dass zumindest die Geometrie der Stempelgrundfläche der Geometrie der Gitterstruktur entspricht. Dadurch kann eine durchgehende gleichbleibende optische Erscheinung an der Oberfläche der Abdeckung erhalten bleiben. Die Stirnbereiche des Lochstempels sind zumeist abweichend davon ausgestaltet, um einen Lochgrund in der Vertiefung der Abdeckung zu erzeugen, der eine maximale Lichtbrechung erzeugt.

Die der Erfindung zugrunde liegende Aufgabe wird des Weiteren durch eine Abdeckung gelöst, bei der zumindest der Lochgrund des Blindloches eine Kontur und/oder Oberflächenstruktur aufweist, die die in die Vertiefung des Blindloches einfallenden Lichtstrahlen bricht und diffus reflektiert. Durch die Vermeidung der Ausgestaltung einer planen und parallel zur Oberfläche der Abdeckung ausgerichteten Lochgrundfläche, welche eine Totalreflexion der einfallenden Lichtstrahlen bewirkt, wird eine glänzende Optik der Abdeckung vermieden.

Bevorzugt ist vorgesehen, dass die Kontur und/oder Oberflächenstruktur des Lochgrundes der Vertiefung einzelne Flächenabschnitte aufweist, die derart ausgerichtet sind, dass deren jeweiligen Flächennormale sich innerhalb der Vertiefung kreuzen und/oder an einer Umfangswand der Vertiefung reflektiert werden. Dadurch werden in verschiedenen Richtungen erfolgende Reflexionen der einfallenden Lichtstrahlen bewirkt, wodurch durch die Lichtstreuung und die Reflexionen wiederum eine diffuse Lichtbrechung gegeben ist. Durch diese Anordnung wird vermieden, dass einzelne Lichtstrahlen aufgrund von Totalreflexionen unmittelbar ohne Kreuzung mit weiteren Lichtstrahlen gegenüber der Oberfläche der Abdeckung aus der beziehungsweise den Vertiefungen heraustreten.

Nach einer weiteren bevorzugten Ausgestaltung der Erfindung sind die Vertiefungen der Blindlochstruktur kegelstumpfförmig ausgebildet sowie zwischen einer Lochgrundfläche und einer daran angrenzenden Umfangswand ein gerundeter Übergangsbereich vorgesehen. Dies ermöglicht eine einfache Ausgestaltung der Stempel von solchen Spritzgusswerkzeugen. Es können beispielsweise zunächst kegelstumpfförmige Stempel hergestellt werden, wobei die Kanten zwischen der Stirnfläche und der Umfangsfläche gebrochen werden. Dadurch können auch bestehende Werkzeuge einfach nachgerüstet werden. Trotz der teilebenen und parallel zur Oberfläche der Abdeckung ausgerichteten Lochgrundfläche wird durch den benachbarten gerundeten Übergangsbereich erzielt, dass die reflektierten Strahlen sich gegenseitig überlagern und kreuzen und somit eine diffuse Lichtbrechung erfolgt.

Nach einer weiteren alternativen Ausgestaltung der Abdeckung weisen die Vertiefungen einen Lochgrund auf, der konkav ausgebildet ist. Dadurch können die reflektierten Strahlen sich wiederum innerhalb der Vertiefung kreuzen und/oder an der Umfangswand der Vertiefung reflektiert werden, wodurch eine diffuse Lichtbrechung erzielt wird. Der Krümmungsverlauf und/oder der Krümmungsradius können an die Größe des Lochgrundes angepasst werden. Alternativ kann der Lochgrund einen parabelförmigen oder einen elliptischen Verlauf oder im Querschnitt gesehen einen nadelspitzenförmigen, W- oder V-förmigen Querschnitt aufweisen.

Des Weiteren ist bevorzugt vorgesehen, dass zumindest der Lochgrund der Vertiefung oberflächenbehandelt ist. Diese Oberflächenbehandlung kann durch das Einbringen einer zusätzlichen Beschichtung oder Lackierung erfolgen. Ebenso kann eine zusätzliche Prägung oder ein Aufrauen vorgesehen sein. Eine solche Oberflächenbehandlung kann ausschließlich in die Vertiefung eingebracht werden. Sofern diese nachträglich eingebracht wird, kann die Vertiefung zunächst eine ebene und parallel zur Oberfläche der Abdeckung ausgerichtete Lochgrundfläche aufweisen. Durch diesen zusätzlichen Arbeitsgang können die Totalreflexionen vermindert und/oder reduziert werden, so dass wiederum eine diffuse Lichtbrechung entsteht. Ebenso kann diese Oberflächenbehandlung zusätzlich zu den zuvor beschriebenen Konturen zur Ausgestaltung von zumindest dem Lochgrund des Loches vorgesehen sein.

Eine weitere bevorzugte Ausgestaltung der Erfindung sieht vor, dass zumindest die Geometrie des Blindlochrandes und vorzugsweise zumindest ein erster Abschnitt der daran angrenzenden Umfangswand der Geometrie der Gitterstruktur entspricht. Dadurch kann ein einheitliches optisches Erscheinungsbild über die gesamte Oberfläche der Abdeckung erzielt werden. Beispielsweise kann die Gitterstruktur einen Streckmetall-Effekt mit schiefwinklig überkreuzenden äquidistanten Kunststoffrippen aufweisen, die rautenförmige Perforationslöcher begrenzen. Des Weiteren können runde, quadratische, rechteckförmigen oder rautenförmige Perforationslöcher vorgesehen sein. Die daran angrenzende Blindlochstruktur ist bevorzugt an solche Geometrien angepasst.

Nach einer weiteren bevorzugten Ausgestaltung der Abdeckung ist diese als Lautsprecherabdeckung oder als Belüftungsabdeckung ausgebildet. Die Perforationslöcher bei der Lautsprecherabdeckung sind insbesondere im Hinblick auf die Schalldurchlässigkeit optimiert. Die Perforationslöcher beim Einsatz als Belüftungsabdeckung sind insbesondere für die Luftdurchlässigkeit optimiert. Bevorzugt kann dabei eine diffuse Luftströmung erzeugt werden.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Ansicht auf ein Instrumententafelbauteil mit darin angeordneten Abdeckungen,
- Figur 2: eine schematische Schnittdarstellung einer Abdeckung gemäß Figur 1,
- Figur 3: eine schematische Schnittdarstellung eines Spritzgusswerkzeuges zur Herstellung einer Abdeckung,
- Figuren 4a und b: schematische Ansichten zur Ausführungsform eines Stempels für eine Vertiefung eines Blindlochs in der Abdeckung und
- Figuren 5a und b: schematische Ansichten einer alternativen Ausführungsform zu den Figuren 4a und b.

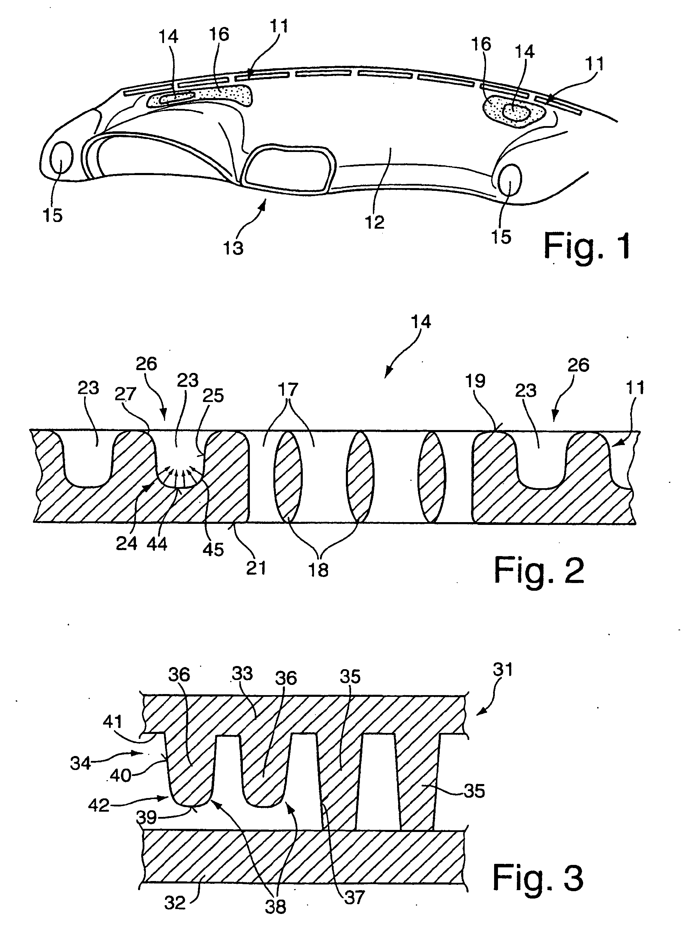

In Figur 1 sind schematisch zwei Abdeckungen 11 dargestellt, die beispielhaft in ein Instrumententafelbauteil 12 eines Kraftfahrzeuges eingebunden sind. Weitere Einbauorte in Kraftfahrzeugen oder in anderen Gegenständen oder Objekten sind ebenfalls möglich. Die Abdeckungen 11 weisen im Ausführungsbeispiel zwei unterschiedlich äußere Konturen und Größen auf. Alternativ können diese ebenso identisch oder als sogenannte linke und rechte Abdeckungen ausgebildet sein, um ein symmetrisches Erscheinungsbild zu erzielen. Des Weiteren kann eine solche Abdeckung 11 eine schematisch angedeutete Mitteldüse 13 oder auch Seitendüsen 15 abdecken. Die Abdeckung 11 ist bevorzugt als Lautsprecherabdeckung oder Belüftungsabdeckung ausgebildet und kann auch für weitere Einsatzzwecke als Blende vorgesehen sein.

Die Abdeckung 11 ist bevorzugt aus spritzgussfähigem Kunststoff, insbesondere PPE oder ABS, hergestellt. Diese Abdeckung 11 umfasst zumindest einen ersten Bereich mit einer Gitterstruktur 14 und zumindest einen weiteren Bereich mit einer Blindlochstruktur 16. Diese Gitterstruktur 14 und Blindlochstruktur 16 wird anhand von Figur 2 näher erörtert. Die Gitterstruktur 14 umfasst Perforationslöcher 17, welche durch Rippen 18 oder Stege begrenzt sind, wobei sich diese Perforationslöcher 17 von einer Oberfläche 19 der Abdeckung 11, welche auch die Sichtseite bildet, bis zu einer Unterseite 21 erstrecken. Die Blindlochstruktur 16 umfasst eine Vielzahl von Vertiefungen 23, welche einen Lochgrund 24 umfassen und ein Blindloch 26 bilden. Die in der Oberfläche 19 liegende Geometrie der Perforationslöcher 17 und die Geometrie eines Vertiefungsrandes 27 der Vertiefung 23 sind vorzugsweise gleich ausgebildet, so dass eine einheitliche optische Anmutung über die gesamte Oberfläche 19 der Abdeckung 11 erzielt wird. Die Gitterstruktur 14 ist bevorzugt an die erforderliche Geometrie des hinter der Abdeckung 11 liegenden Lautsprechers oder des Belüftungskanals oder an eine Beleuchtung angepasst. Diese Gitterstruktur 14 wird zumindest teilweise von der Blindlochstruktur 16 umgeben. Ebenso kann diese Gitterstruktur auch an einen äußeren Rand oder eine Abdeckung 11 angrenzen.

Zur Herstellung einer solchen Abdeckung 11 ist ein Spritzgusswerkzeug 31 vorgesehen, von welchem ein schematischer Teilschnitt in Figur 3 dargestellt ist. Bevorzugt ist ein solches Spritzgusswerkzeug 31 als Zweiplattenspritzgusswerkzeug ausgebildet. Ebenso können weitere Bauformen von Spritzgusswerkzeugen vorgesehen sein.

Das Spritzgusswerkzeug 31 umfasst eine erste Werkzeughälfte 32, welche beispielsweise als Platte ausgebildet und zur Herstellung einer Unterseite 21 beziehungsweise einer Kontur in der Unterseite 21 der Abdeckung 11 vorgesehen ist. Gegenüberliegend ist eine zweite Werkzeughälfte 33 ausgebildet, welche beispielsweise eine Vielzahl von Stempeln 35, 36 umfasst. Die Stempel 35 erstrecken sich bis zur ersten Werkzeughälfte 32 und bilden somit die Perforationslöcher 17 aus. Die weiteren Stempel 36 sind mit Abstand zur ersten Werkzeughälfte 32 angeordnet und ermöglichen somit die Herstellung einer Vertiefung 23 mit einem Lochgrund 24 für ein Blindloch 26.

Die Querschnittsgeometrie des Stempels 35 steht in Abhängigkeit der geforderten Optik für die Gitterstruktur 14. Analoges gilt für die Stempel 36. Die Stempel 36 weisen einen Stirnbereich 38 auf, der einen entsprechend komplementär ausgebildeten Lochgrund 24 in der Vertiefung 23 des Blindlochs 26 ausgestaltet. Der Stirnbereich 38 umfasst eine Stirnfläche 39 sowie eine daran angrenzende Umfangswand 40, die sich bis zu einer Grundfläche 41 der zweiten Werkzeughälfte 33 erstreckt. Gemäß der in Figur 3 dargestellten Ausführungsform ist die Stirnfläche 39 nur in einem sehr kleinen Bereich plan und parallel zur Grundfläche 41 ausgebildet. In einem daran angrenzenden Übergangsbereich 42 ist eine Rundung vorgesehen. Dadurch wird eine Art topf- oder napfförmige Vertiefung 23 ausgebildet, welche beispielsweise einen komplementär zur Stempelgeometrie 36 ausgebildeten Lochgrund 24 umfasst. Durch diese Anordnung wird ermöglicht, dass beispielsweise in die Vertiefung 23 einfallende Lichtstrahlen am Lochgrund 24 reflektiert werden und die reflektierten Strahlen sich kreuzen und brechen oder mischen. Dadurch kann eine diffuse Lichtbrechung entstehen, wodurch eine mattierte Anmutung der Oberfläche 31 der Abdeckung 11 zumindest im Bereich der Blindlochstruktur 16 erzielt wird. Die sich kreuzende reflektierte Strahlung ist beispielhaft durch einzelne Pfeile dargestellt.

Diese gerundete Kontur im Stirnbereich 38 des Stempels 36 kann durch eine Brechung einer im Stirnbereich 38 liegenden Kante eines kegelstumpfförmig oder zylindrisch ausgebildeten Stempels 36 ermöglicht sein. Somit können auch bestehende Spritzgusswerkzeuge 31 mit kegelstumpfförmigen Konturen in einfacher Weise nachbearbeitet und umgerüstet werden. Alternativ zu der in Figur 3 dargestellten Ausführungsform können vielfältig verschiedene Konturen vorgesehen sein. Bei allen herzustellenden Konturen für den Lochgrund 24 der Vertiefung 23 ist jedoch vorgesehen, dass diese eine Kontur aufweisen, so dass der Lochgrund 24 als eine Reflexionsfläche für einfallende Lichtstrahlen ausgebildetist, deren reflektierten Lichtstrahlen sich innerhalb der Vertiefung 23 des Blindloches 26 kreuzen und/oder an einer Umfangswand 26 der Vertiefung 23 reflektiert werden, damit eine Totalreflexion aus der Vertiefung 23 heraus vermieden wird. Dadurch kann eine diffuse Lichtbrechung erzielt werden. Die diffuse Lichtbrechung im Lochgrund 24 der Vertiefung 23 kann auch dadurch erzielt werden, dass nur die Oberflächenstruktur des Lochgrundes 24 eine Streuung der einfallenden Lichtstrahlen bewirkt, so dass eine Rückreflexion aus der Vertiefung 23 heraus verhindert ist. Solche Oberflächenstrukturen können beispielsweise durch ein Nachbehandeln der Oberfläche, wie beispielsweise ein Sandstrahlen, ein Beschichten, ein Lackieren, ein Ätzen oder dergleichen, ermöglicht werden. Alternativ kann auch eine Prägung der Oberfläche vorgesehen sein, wobei diese Prägung während des Spritzgussvorganges beim Herstellen der Abdeckung eingebracht sein kann oder nachträglich nochmals eingebracht wird.

Des Weiteren kann eine Kombination aus einer bevorzugten Kontur des Lochgrundes 24 und einer lichtstreuenden beziehungsweise lichtbrechenden Oberflächenstruktur zur Ausgestaltung der Vertiefung 23 vorgesehen sein.

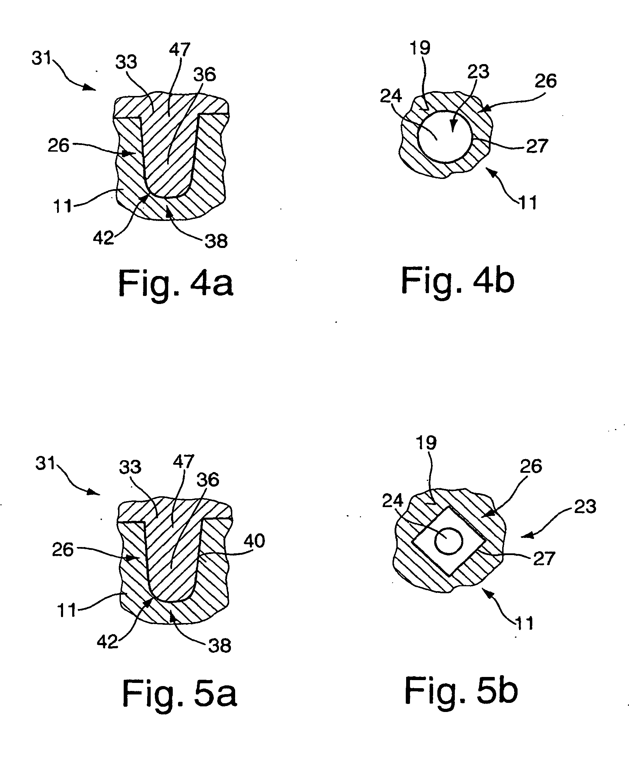

In Figur 4a ist eine alternative Ausgestaltung einer Geometrie des Stempels 36 in einer Seitenansicht mit einer in der Kavität gebildeten Abdeckung 11 bezüglich der Blindlochstruktur 16 in einer Detailansicht dargestellt. In Figur 4b ist eine Ansicht auf einen Vertiefungsrand 27 der Vertiefung 23 dargestellt, welche mit dem Stempel 36 gemäß Figur 4a hergestellt ist. Bei dieser Ausführungsform weist der Stempel 36 einen Stirnbereich 38 auf, der halbkugelförmig ausgebildet ist. Die Stempelgrundfläche 47 ist beispielsweise rund ausgebildet und ergibt somit einen runden Vertiefungsrand 27.

Die Figuren 5a und b zeigen Alternativen zu den Figuren 4a und b. Der Stempel 36 weist beispielsweise eine rautenförmige Stempelgrundfläche 47 auf, die in eine rautenförmige Kontur des Verbindungsrandes 37 übergeht. Ausgehend von dieser rautenförmigen Stempelgrundfläche 47 erstreckt sich die Umfangswand 40 des Stempels 36 derart, dass dieser in einen gerundeten Stirnbereich 38 übergeht. Dadurch kann eine optimierte Lichtbrechung ermöglicht sein.

Die vorbeschriebenen Geometrien und Ausführungsformen sind nur beispielhaft. Beliebige Kombinationen und Auswahl an Geometrien sind möglich, wobei eine matte Anmutung im Blindloch zumindest im Bereich der Blindlochstruktur dann gegeben ist, wenn zumindest im Lochgrund 24 der Vertiefung 23 einzelne Flächenabschnitte derart zueinander angeordnet sind, dass deren jeweiligen Flächennormale sich innerhalb der Vertiefung 23 mit zumindest einer weiteren Flächennormalen kreuzt und/oder an einer Umfangswand 25 der Vertiefung 23 reflektiert wird. Dies gilt sowohl für kleine Flächenabschnitte, welche beispielsweise durch ein Sandstrahlen oder durch eine rändelförmige Prägung oder dergleichen hergestellt werden, sowie für größere Flächen. Diese einzelnen Flächenabschnitte können auch derart klein sein, dass eine quasi gerundete Oberfläche ausgebildet ist.

Ergänzend können auch die seitlichen Wandabschnitte der Umfangswand 40 mit einer Kontur oder Oberflächenstruktur versehen sein, die zur Lichtbrechung beitragen.

## Patentansprüche

1. Spritzgusswerkzeug zur Herstellung einer Abdeckung (11), insbesondere für ein Instrumententafelbauteil (12), aus einem Kunststoffmaterial, die einen ersten, eine Gitterstruktur (14) umfassenden Bereich aufweist, bei dem die Gitterstruktur (14) durch Rippen (18) begrenzte Perforationslöcher (17) aufweist, und einen zweiten, eine Blindlochstruktur (16) aufweisenden Bereich umfasst, bei dem die Blindlochstruktur (16) durch Vertiefungen (23) mit einem Lochgrund (24) ausgebildet ist, mit zumindest einer ersten und einer zweiten Werkzeughälfte (32, 33), die eine Kavität (34) zur Ausbildung der Abdeckung (11) aufweisen, mit ersten Stempeln (35), die zur Herstellung von den Perforationslöchern (17) der Gitterstruktur (14) vorgesehen sind und mit weiteren Stempeln (36), die zur Herstellung der Blindlochstruktur (16) ausgebildet sind, **dadurch gekennzeichnet, dass** ein in die Kavität (34) weisender Stirnbereich (38) der weiteren Stempel (36) zur Herstellung der Blindlochstruktur (16) eine Kontur und/oder Oberflächenstruktur aufweist, durch welche zumindest ein reflexionsbrechender Lochgrund (24) des Blindlochs (26) in der Abdeckung (11) herstellbar ist.

2. Spritzgusswerkzeug nach Anspruch 1, **dadurch gekennzeichnet, dass** der Stirnbereich (38) des Stempels (36), welcher ein Stirnende (39) und zumindest einen daran angrenzenden Übergangsbereich (42) umfasst, konvex, elliptisch, parabelförmig, nadelspitzenförmig, W- oder V-förmig ausgebildet ist.

3. Spritzgusswerkzeug nach Anspruch 1 oder 2, **dadurch gekennzeichnet, dass** der Stirnbereich (38) des Stempels (36) oberflächenbehandelt ist und vorzugsweise eine aufgeraute, gerändelte oder geprägte Oberfläche aufweist.

4. Abdeckung aus einem Kunststoffmaterial, welche insbesondere durch ein Spritzgusswerkzeug gemäß den Ansprüchen 1 bis 3 hergestellt ist, mit einem ersten, eine Gitterstruktur (14) umfassenden Bereich, bei dem die Gitterstruktur (14) durch Rippen (18) ausgebildet ist, welche Perforationslöcher (17) begrenzen und mit zumindest einem zweiten, eine Blindlochstruktur (16) aufweisenden Bereich, bei dem die Blindlochstruktur (16) durch zumindest eine Vertiefung (23) mit einem Lochgrund (24) als Blindloch (26) ausgebildet ist, **dadurch gekennzeichnet, dass** zumindest der Lochgrund (24) des Blindloches (26) eine Kontur und/oder Oberflächenstruktur aufweist, die/welche die in das Blindloch (26) einfallenden Lichtstrahlen bricht und diffus reflektiert.

5. Abdeckung nach Anspruch 4, **dadurch gekennzeichnet, dass** die Kontur und/oder Oberflächenstruktur des Lochgrundes (24) des Blindloches (26) einzelne Flächenabschnitte aufweist, die derart ausgerichtet sind, dass deren jeweiligen Flächennormale sich innerhalb der Vertiefung (23) des Blindloches (26) kreuzen und/oder an einer Umfangswand (25) der Vertiefung (23) reflektiert werden.

6. Abdeckung nach Anspruch 4 oder 5, **dadurch gekennzeichnet, dass** eine Umfangswand (25) der Vertiefung (23) des Blindlochs (26) kegelstumpfförmig ausgebildet und zwischen einer Lochgrundfläche (44) und einer Umfangswand (25) ein gerundeter Übergangsbereich (42) vorgesehen ist.

7. Abdeckung nach Anspruch 4 oder 5, **dadurch gekennzeichnet, dass** die Vertiefung (23) einen Lochgrund (24) aufweist, der konkav, elliptisch, parabelförmig, nadelspitzförmig, W- oder V-förmig ausgebildet ist.

8. Abdeckung nach einem der Ansprüche 4 bis 7, **dadurch gekennzeichnet, dass** zumindest der Lochgrund (24) der Vertiefung (23) oberflächenbehandelt ist und vorzugsweise eine aufgeraute, beschichtete, lackierte oder geprägte Oberfläche aufweist.

9. Abdeckung nach einem der Ansprüche 4 bis 8, **dadurch gekennzeichnet, dass** zumindest die Geometrie des Vertiefungsrandes (37) des Blindlochs (26) und vorzugsweise ein erster Abschnitt der Umfangswand (25) der Geometrie der Gitterstruktur (14), insbesondere des Perforationsloches (17), entspricht.

10. Abdeckung nach einem der Ansprüche 4 bis 9, **dadurch gekennzeichnet, dass** diese als Lautsprecher-Abdeckung oder Belüftungs-Abdeckung ausgebildet ist.

## Claims

1. An injection moulding tool for fabricating a covering (11), in particular for an instrument panel component (12), made from a plastic material and having a first zone that comprises a grid structure (14) said grid structure (14) having perforation holes (17) delimited by ribs (18) and comprising a second zone having a blind hole structure (16) said blind hole structure (16) being formed by recesses (23) provided each with a hole bottom (24), said tool having at least one first and one second mould half (32, 33) which feature a cavity (34) for forming the covering (11), first dies (35) provided for forming the perforation holes (17) of the grid structure (14), and further dies (36) provided for forming the blind hole structure (16), **characterised in that** a frontal portion (38) of the further dies (36) for forming the blind hole structure (16) oriented so as to extend into the cavity (34) has a contour and/or surface structure by which at least one reflexion refracting hole bottom (24) of the blind hole (26) may be formed in the covering (11).

2. The injection moulding tool as claimed in claim 1, **characterised in that** the front portion (38) of the die (36), which comprises a front end (39) and at least one transition zone (42) adjacent thereto, is formed in a convex, elliptical, parabolic, needlepoint-shaped, W-shaped or V-shaped manner.

3. The injection moulding tool as claimed in claim 1 or 2, **characterised in that** the front portion (38) of the die (36) is surface-treated and preferably has a roughened, knurled or embossed surface.

4. A covering made from a plastic material and fabricated in particular by an injection moulding tool as claimed in claims 1 to 3, said covering having a first zone comprising a grid structure (14), said grid structure (14) being formed by ribs (18) delimiting perforation holes (17), and at least one second zone having a blind hole structure (16), said blind hole structure (16) being formed as a blind hole (26) by at least one recess (23) featuring a hole bottom (24), **characterised in that** at least the hole bottom (24) of the blind hole (26) has a contour and/or surface structure that refracts and diffusely reflects the rays of light entering the blind hole (26).

5. The covering as claimed in claim 4, **characterised in that** the contour and/or surface structure of the hole bottom (24) of the blind hole (26) has individual surface portions which are oriented in such a manner that their respective surface normals intersect one another within the recess (23) of the blind hole (26) and/or are reflected on a circumferential wall (25) of the recess (23).

6. The covering as claimed in claim 4 or 5, **characterised in that** a circumferential wall (25) of the recess (23) of the blind hole (26) is shaped in a frusto-conical form and a rounded transition zone (42) is provided between a hole bottom surface (44) and a circumferential wall (25).

7. The covering as claimed in claim 4 or 5, **characterised in that** the recess (23) has a hole bottom (24) that is formed in a convex, elliptical, parabolic, needlepoint-shaped, W-shaped or V-shaped manner.

8. The covering as claimed in any one of claims 4 to 7, **characterised in that** at least the hole bottom (24) of the recess (23) is surface-treated and preferably has a roughened, coated, lacquered or embossed surface.

9. The covering as claimed in any one of claims 4 to 8, **characterised in that** at least the geometry of the recess edge (37) of the blind hole (26) and preferably a first portion of the circumferential wall (25) correspond to the geometry of the grid structure (14), in particular of the perforation hole (17).

10. The covering as claimed in any one of claims 4 to 9, **characterised in that** it is realised in the form of a speaker cover or of an aeration cover.

## Revendications

1. Outil de moulage par injection destiné à fabriquer un recouvrement (11), notamment pour un composant de tableau d'instruments (12), en une matière plastique, lequel présente une première zone comprenant une structure treillissée (14) dans laquelle la structure treillissée (14) présente des trous de perforation (17) limités par des nervures (18), et lequel comprend une deuxième zone présentant une structure à trous borgnes (16) dans laquelle la structure à trous borgnes (16) est formée par des creux (23) pourvus d'un fond de trou (24), avec au moins une première et une deuxième demi-forme de moule (32, 33) qui présentent une cavité (34) destinée à former le recouvrement (11), avec des premiers moules mâles (35) qui sont prévus pour fabriquer les trous de perforation (17) de la structure treillissée (14), et avec d'autres moules mâles (36) qui sont formés pour fabriquer la structure à trous borgnes (16), **caractérisé en ce qu'**une zone frontale (38) des autres moules mâles (36) destinés à réaliser la structure à trous borgnes (16) s'étend dans la cavité (34) et présente un contour et/ou une structure de surface qui permet(tent) de fabriquer dans le recouvrement (11) au moins un fond de trou (24) du trou borgne (26) capable de réfracter la réflexion.

2. Outil de moulage par injection selon la revendication 1, **caractérisé en ce que** la zone frontale (38) du moule mâle (36) laquelle comprend une extrémité frontale (39) et au moins une zone de transition (42) qui lui est contiguë est réalisée de forme convexe, elliptique, parabolique, en forme de pointe d'aiguille, en forme de W ou de V.

3. Outil de moulage par injection selon la revendication 1 ou 2, **caractérisé en ce que** la zone frontale (38) du moule mâle (36) a subi un traitement de surface et présente de préférence une surface rugueuse, moletée ou estampée.

4. Recouvrement en une matière plastique lequel est fabriqué notamment par un outil de moulage par injection selon l'une quelconque des revendications 1 à 3, avec une première zone comprenant une structure treillissée (14) dans laquelle la structure treillissée (14) est formée par des nervures (18) qui limitent des trous de perforation (17), et avec au moins une deuxième zone présentant une structure à trous borgnes (16) dans laquelle la structure à trous borgnes (16) est formée en tant que trou borgne (26) par au moins un creux (23) avec un fond de trou (24), **caractérisé en ce qu'**au moins le fond de trou (24) du trou borgne (26) présente un contour et/ou une structure de surface qui réfracte(nt) des rayons lumineux pénétrant dans le trou borgne (26) et les réfléchit/réfléchissent de manière diffuse.

5. Recouvrement selon la revendication 4, **caractérisé en ce que** le contour et/ou la structure de surface du fond de trou (24) du trou borgne (26) présente(nt) des parties de surface individuelles qui sont orientées de telle sorte que leurs normales de surface respectives se croisent à l'intérieur du creux (23) du trou borgne (26) et/ou sont réfléchies par une paroi circonférentielle (25) du creux (23).

6. Recouvrement selon la revendication 4 ou 5, **caractérisé en ce qu'**une paroi circonférentielle (25) du creux (23) du trou borgne (26) est réalisée sous forme de cône tronqué et qu'entre une surface de fond de trou (44) et une paroi circonférentielle (25) est prévue une zone de transition arrondie (42).

7. Recouvrement selon la revendication 4 ou 5, **caractérisé en ce que** le creux (23) présente un fond de trou (24) qui est réalisé de forme concave, elliptique, parabolique, en forme de pointe d'aiguille, en forme de W ou de V.

8. Recouvrement selon l'une quelconque des revendications 4 à 7, **caractérisé en ce qu'**au moins le fond de trou (24) du creux (23) a subi un traitement de surface et présente de préférence une surface rugueuse, revêtue, laquée ou estampée.

9. Recouvrement selon l'une quelconque des revendications 4 à 8, **caractérisé en ce qu'**au moins la géométrie du bord de creux (37) du trou borgne (26) et de préférence une première partie de la paroi circonférentielle (25) correspondent à la géométrie de la structure treillissée (14), notamment du trou de perforation (17).

10. Recouvrement selon l'une quelconque des revendications 4 à 9, **caractérisé en ce que** celui-ci est réalisé en tant que recouvrement de haut-parleur ou recouvrement d'aération.
